# EUROPÄISCHE PATENTSCHRIFT

(11) **EP 1 367 931 B1**
(45) Veröffentlichungstag und Bekanntmachung des Hinweises auf die Patenterteilung: **18.08.2004**
(21) Anmeldenummer: 02722202.5
(22) Anmeldetag: 11.03.2002
(51) Int. Cl.: A47L 9/02, A47L 9/24

(54) **KIPPGELENKAUSBILDUNG EINES STAUBSAUGER-SAUGKANALS**
A TILTING JOINT IN A VACUUM CLEANER SUCTION CHANNEL
CONFIGURATION A ARTICULATION BASCULANTE D'UN TUNNEL D'ASPIRATION D'ASPIRATEUR

(30) Priorität: 13.03.2001 DE 10111867
(43) Veröffentlichungstag der Anmeldung: 10.12.2003
(73) Patentinhaber: Vorwerk & Co. Interholding GmbH, 42275 Wuppertal (DE)
(72) Erfinder: CORNELISSEN, Markus, 42289 Wuppertal (DE)
(74) Vertreter: Müller, Enno, Dipl.-Ing.
(86) Internationale Anmeldenummer: PCT/EP2002/002653
(87) Internationale Veröffentlichungsnummer: WO 2002/071911

(56) Entgegenhaltungen:
- CH-A- 676 194
- DE-A- 2 220 815
- DE-C- 19 704 796
- DE-U- 1 860 267
- FR-A- 2 417 285
- FR-A- 2 421 313
- FR-A- 2 439 577
- GB-A- 1 138 650

## Beschreibung

Die Erfindung betrifft ein Kippgelenk eines Staubsauger-Saugkanals, vorzugsweise zur Anschlussausbildung an ein Staubsauger-Vorsatzgerät, mit einem Eingangskanalabschnitt und einem Ausgangskanalabschnitt.

Derartige Gelenkausbildungen sind in verschiedenen Ausführungen bekannt. Bspw. wird hier auf die DE 1 860 267 U und auf die EP-B1 0 755 214 verwiesen, aus weicher eine Gelenkausbildung in Art eines Schneckenwendels beschrieben ist. Weiter sind Kippgelenke bekannt, bei welchen die Gelenkachse parallel zu einer Stirnkante des Staubsauger-Vorsatzgerätes verlaufend die einander zugeordneten Enden des Eingangskanalabschnittes und des Ausgangskanalabschnittes durchsetzt.

Im Hinblick auf den zuvor beschriebenen Stand der Technik wird eine technische Problematik der Erfindung darin gesehen, eine Kippgelenkausbildung eines Staubsauger-Saugkanales der in Rede stehenden Art anzugeben, welche bei kompakter Bauform hinsichtlich der Querschnittsausbildung sowie der Funktionssicherheit verbessert ausgebildet ist.

Diese Problematik ist zunächst und im wesentlichen durch den Gegenstand des Anspruches 1 gelöst, wobei darauf abgestellt ist, dass angepasst kreisabschnittförmige Abschnitte zugeordneter Enden des Eingangskanalabschnittes und des Ausgangskanalabschnittes im Zuge einer Verkippung der Abschnitte zueinander teleskopierbar sind. Zufolge dieser Ausgestaltung ist eine Kippgelenkausbildung angegeben, welche sich bei kompakter Bauform durch eine erhöhte Funktionssicherheit auszeichnet. Durch die erfindungsgemäße Teleskopierbarkeit der -bezogen auf einen Drehpunkt- kreisabschnittförmigen Endabschnitte des Eingangskanal- und des Ausgangskanalabschnittes ist über einen großen Kippwinkelbereich von bspw. 0° bis bspw. 100° stets ein gleichmäßiger, strömungstechnisch günstiger Saugkanal-Übergangsabschnitt gegeben. Hierzu sind die Kanalendabschnitte konzentrisch zu einer Kippachse angeordnet, wobei im Zuge der Verkippung diese Endabschnitte teleskopartig übereinander gleiten. Durch die erfindungsgemäße Ausgestaltung werden Querschnittsverengungen im Bereich des Gelenkes sowie damit einhergehende extreme Strömungsgeräusche entgegengewirkt. In jeder Kippstellung weist das Gelenk eine Verstopfungsfreiheit, Dichtigkeit und Stabilität auf. Darüber hinaus bietet die erfindungsgemäße Gelenkausbildung die Möglichkeit, den Strömungsquerschnitt nahezu beliebig zu gestalten. Denkbar sind bspw. kreisrunde, ovale, wappenförmige, ellipsenförmige, quadratische oder rechteckige Strömungsquerschnitte. Zudem ist der Strömungsquerschnitt des Gelenkes, sowie die Abdichtung des Strömungsweges zur Umgebung hin unabhängig vom Kippwinkel. Durch entsprechende Maßnahmen, bspw. durch eine in vertikaler Richtung höhere Anordnung des Eingangskanalabschnittes bzw. entsprechende Formgebung, kann dafür Sorge getragen werden, dass der bewegliche Teil des Gelenkes nicht als Prallfläche für stark impulsbehaftete Sauggüter dient. Einer Beschädigung und extremen Schmutzanhaftung, bspw. durch Aufsaugen von Nadeln oder Blättern - zu Ungunsten der Dichtigkeit und Leichtgängigkeit-, ist somit entgegengewirkt. In einer Weiterbildung des Erfindungsgegenstandes ist vorgesehen, dass der eine Kanalabschnitt um einen festen Drehpunkt im Zuge der Teleskopierung gedreht wird, während der andere Kanalabschnitt feststehend ist. Bevorzugt ist hierbei der Eingangskanalabschnitt, insbesondere bei einer Ausbildung in einem Staubsauger-Vorsatzgerät, feststehend ausgebildet, wobei der mit einem Staubsauger zu verbindende Ausgangskanalabschnitt um einen in dem Staubsauger-Vorsatzgerät festen Drehpunkt bzw. um eine feste Kippachse drehbar ist. Diesbezüglich kann weiter vorgesehen sein, dass der eine Kanalabschnitt mit einer, eine Drehachse umgebenden Wandung einen feststehenden Gelenkzapfen ausbildet. So ist eine Integration gelenkpunktbildender Teile an einem der Kanalabschnitte realisierbar. Weiter ist durch entsprechende Formgebung die Realisierung der Kippachse durch eine Steckachse denkbar. Insbesondere hinsichtlich einer Herstellungsvereinfachung erweist es sich als vorteilhaft, dass eine Außenwandung des anderen Kanalabschnittes eine den Gelenkzapfen teilweise umfassende Gelenkschale bildet. Vorzugsweise bildet der in dem Staubsauger-Vorsatzgerät feststehende Eingangskanalabschnitt die Gelenkschale aus, in welcher Gelenkschale der in entsprechenden Halterungen des Staubsauger-Vorsatzgerätes getragene Gelenkzapfen des anderen Kanalabschnittes -Ausgangskanalabschnitt- zur Bildung des Kippgelenkes einliegt. Weiter ist in einer vorteilhaften Weiterbildung des Erfindungsgegenstandes vorgesehen, dass innenseitig des Teleskopaußenrohres eine Dichtung angeordnet ist, die mit einer Außenseite des Teleskopinnenrohres zusammenwirkt. Darüber hinaus kann weiter vorgesehen sein, dass außenseitig des Teleskopinnenrohres eine Dichtung angeordnet ist, die mit einer Innenseite des Teleskopaußenrohres zusammenwirkt. Diese Dichtungen können bspw. Filzstreifen, Gummi- oder Kunststoff-Dichtlippen sein, wobei weiter diesen Dichtungen eine abstreifende Wirkung zugeordnet sein kann. Bei Anordnung zweier Dichtungen, einer innenseitig des Teleskopaußenrohres und einer außenseitig des Teleskopinnenrohres, ist zwischen diesen Dichtungen ein staubfreier Bereich geschaffen, der sich je nach Kippstellung vergrößert oder verkleinert. Bevorzugt haben diese Dichtungen abstreifende Wirkung. So werden Kanalabschnitte, welche in einer Kippstellung der Schmutzbeaufschlagung ausgesetzt sind, bei Kippverlagerung in eine entgegengesetzte Kippstellung durch die diese Seite des Kanals beaufschlagende Dichtung des anderen Kanalabschnittes gereinigt, so dass die Dichtigkeit sowie die Leichtgängigkeit des Gelenkes stets gewährleistet ist. Darüber hinaus werden durch die Abstreifdichtungen nach außen weisende, in verschiedenen Kippstellungen gegebenenfalls sichtbare Kanalaußenwandungsabschnitte gereinigt, was insbesondere aus hygienischen Gründen gewünscht ist. Die Dichtungen sind durch die erfindungsgemäße Anordnung außerhalb etwaiger Prallflächen größerer Staub- oder Schmutzpartikel, die nicht in gleicher Weise wie die Luftströmung umgelenkt werden, positioniert. Diesbezüglich kann vorgesehen sein, dass an einer Stirnfläche des Teleskopaußenrohres und/oder des Teleskopinnenrohres eine Dichtung angeordnet ist. So kann bspw. eine stirnseitige, umlaufende Lippendichtung vorgesehen sein, die mit ihrem freien, lippenartigen Endbereich mit der zugeordneten Oberfläche des anderen Teleskoprohres zusammenwirkt. Weiter wird vorgeschlagen, dass die Dichtung angeformt ist, so bspw. durch Anspritzen einer Weichlippe im Zwei-Komponentenverfahren. Die erfindungsgemäße Teleskopierbarkeit der Kanalabschnitte ist maßgeblich dadurch erreicht, dass die Drehachse der Kanalabschnitte außerhalb des Saugkanals liegt, wobei der Abstand der Drehachse zu den Kanalabschnitten den Gegebenheiten angepasst gewählt werden kann. So kann bspw. die Drehachse in unmittelbarer Nähe zu den teleskopierbar ineinanderfahrenden Kanalabschnitten oder auch mit Abstand zu diesen platziert sein. Um einen möglichst großen Kippwinkel anzubieten, ist in einer vorteilhaften Weiterbildung vorgesehen, dass die Kanalabschnitte jeweils etwa einem Viertelkreisabschnitt entsprechen, wodurch ein großer Überlappungsbereich von Eingangskanal- und Ausgangskanalabschnitt gegeben ist. Bevorzugt wird hierbei weiter, dass zumindest der, dem Staubsauger zuordbare Ausgangskanalabschnitt mehr als einem Viertelkreisabschnitt entspricht, so dass eine Kippstellung des Ausgangskanalabschnittes über die vertikale hinaus zur Erlangung einer Parkstellung des Staubsaugers erreicht werden kann. Bevorzugt ist hierbei eine (Park-)94°-Stellung. Diesbezüglich wird schließlich vorgeschlagen, dass eine Stellung des einen Kanalabschnittes, bevorzugt die Parkstellung des Ausgangskanalabschnittes, rastbar ist, wozu bspw. eine an dem Ausgangskanalabschnitt außenwandig angeformte Rastnase sich bei Erreichen des Park-Kippwinkels in ein ausfederbares und entsprechend geformtes Gegenstück, welches bevorzugt in dem Staubsauger-Vorsatzgerät fest angeordnet ist, unterschiebt. Zufolge der beschriebenen Ausgestaltung der erfindungsgemäßen Kippgelenkausbildung sind Kippwinkel von über 90° realisierbar, wobei bei kompakter Bauform der Strömungsquerschnitt unabhängig ist vom Kippwinkel. Es sind beliebig stabile, verschleißunanfällige Ausführungen bei Integration der Parkfunktion realisierbar. Durch die Anordnung der beschriebenen Dichtungen werden keine schmutzbeaufschlagten Flächen sichtbar. Darüber hinaus erweist sich die erfindungsgemäße Kippgelenkausbildung als herstellungsgünstig.

Nachstehend ist die Erfindung anhand der beigefügten Zeichnung, welche lediglich mehrere Ausführungsbeispiele darstellt, näher erläutert. Es zeigt:
- Fig. 1: in perspektivischer Darstellung einen Staubsauger mit einem über eine Kippgelenkausbildung angeschlossenen Staubsauger-Vorsatzgerät;
- Fig. 2: eine schematische Längsschnittdarstellung durch das in strichpunktierter Linienart wiedergegebene Staubsauger-Vorsatzgerät mit einer erfindungsgemäßen Kippgelenkausbildung in einer ersten Ausführungsform, eine erste Endstellung -Parkstellung- betreffend;
- Fig. 3: die Ausschnittvergrößerung gemäß dem Bereich III-III in Fig. 2;
- Fig. 4: eine der Fig. 2 entsprechende Darstellung, jedoch eine zweite Kippstellung -0°-Stellungbetreffend;
- Fig. 5: den Schnitt gemäß der Linie V-V in Fig. 4;
- Fig. 6: eine der Fig. 5 entsprechende Schnittdarstellung, jedoch eine zweite Ausführungsform betreffend;
- Fig. 7: eine schematische Darstellung der erfindungsgemäßen Kippgelenkausbildung in einer dritten Ausführungsform;
- Fig. 8: die Kippgelenkausbildung in einer schematischen Darstellung, eine weitere Ausführungsform betreffend;
- Fig. 9: eine der Fig. 3 entsprechende Darstellung mit Dichtungen in einer alternativen Ausführungsform;
- Fig. 10: eine der Fig. 2 entsprechende Darstellung, die Kippgelenkausbildung einer weiteren Ausführungsform betreffend;
- Fig. 11: die Ausschnittvergrößerung des Bereiches XI-XI in Fig. 10.

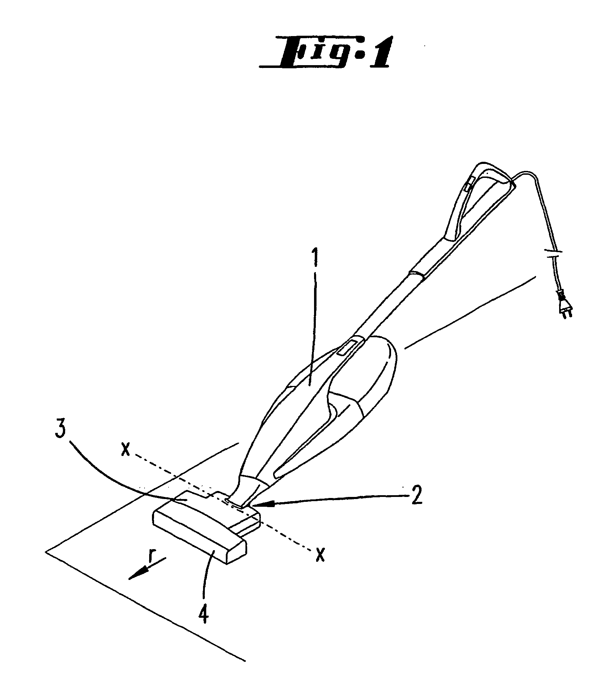

Dargestellt und beschrieben ist zunächst mit Bezug zu Fig. 1 ein Staubsauger 1 in Form eines Handstaubgerätes mit einem über eine Kippgelenkausbildung 2 angeschlossenen Staubsauger-Vorsatzgerät 3 in Form einer Bodendüse, wobei eine Kippgelenkachse x parallel verläuft zu einer quer zur üblichen Verfahrrichtung r ausgerichteten Stirnfläche 4 des Vorsatzgerätes 3.

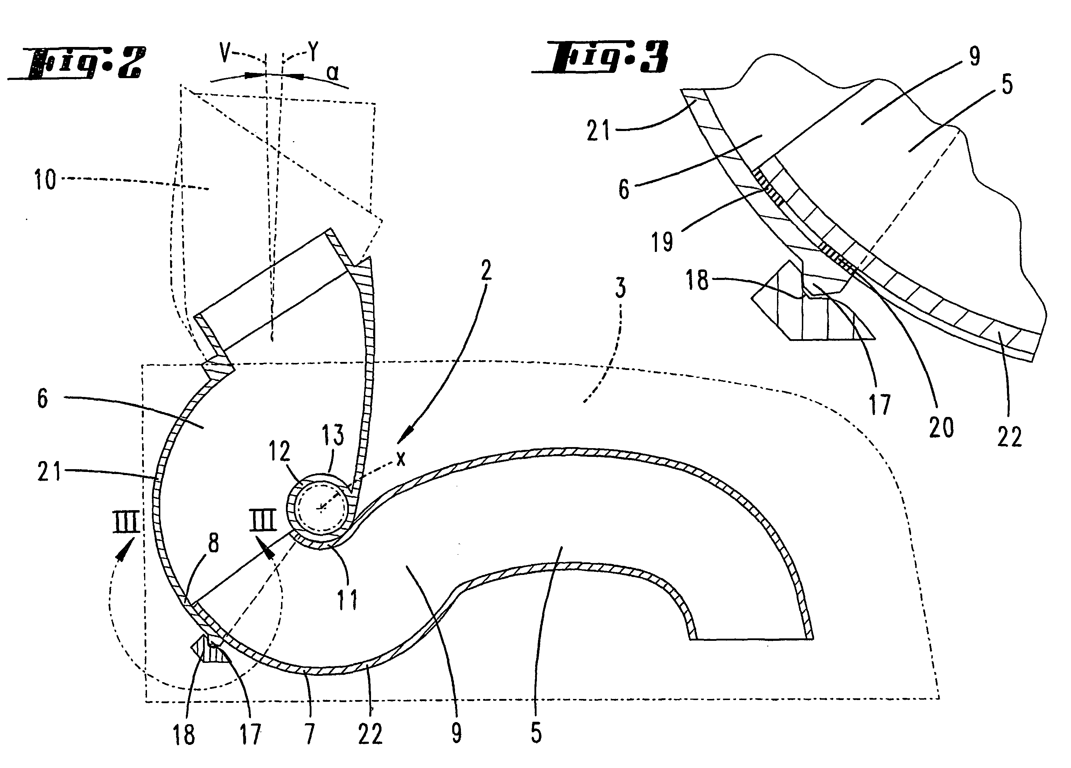

In den Fig. 2 bis 4 ist eine erfindungsgemäße Kippgelenkausbildung 2 in einer ersten Ausführungsform dargestellt. Das Kippgelenk besteht zunächst im wesentlichen aus einem in dem Staubsauger-Vorsatzgerät 3 feststehend angeordneten Eingangskanalabschnitt 5 und einem zu letzterem um die Achse x kippbaren, mit dem Staubsauger 1 verbindbaren Ausgangskanalabschnitt 6.

Die zugeordneten Enden 7, 8 des Eingangskanalabschnittes 5 sowie des Ausgangskanalabschnittes 6 weisen kreisabschnittförmige Abschnitte auf, welche jeweils etwa einem Viertelkreisabschnitt entsprechen, wobei weiter die Außenkontur des Endes 7 des Eingangskanalabschnittes 5 der korrespondierenden Innenkontur des Ausgangskanalabschnitt-Endes 8 angepasst ist, so dass das Ende 7 in das Ende 8 des Ausgangskanalabschnittes 6 eintauchen kann.

Hierdurch ist eine Teleskopierbarkeit der Kanalabschnitte 5, 6 im Bereich ihrer Enden 7, 8 gegeben, welche weiter dadurch erreicht ist, dass die kreisabschnittförmigen Enden 7 und 8 konzentrisch auf der Kippachse x angeordnet sind, welch letztere durch die kreisabschnittförmige Ausbildung der Enden 7, 8 außerhalb des Saugkanals 9 liegt.

Zufolge dieser Ausgestaltung kann der an seinem freien Ende mit einem nicht näher dargestellten Anschlussstutzen 10 für den Staubsauger 1 versehene Ausgangskanalabschnitt 6 um die Kippachse x schwenkend über das Ende 7 des Eingangskanalabschnittes 5 gleiten, zur teleskopartigen Zusammenwirkung im Zuge einer Kippverlagerung.

Wie in Fig. 2 dargestellt, ist bevorzugt ein Kippwinkel von über 90°, d. h. über eine Vertikale V hinaus erreichbar. So entsprechen die Enden 7, 8 des Eingangskanalabschnittes 5 und des Ausgangskanalabschnittes 6 etwas mehr als einem Viertelkreisabschnitt, so dass der Ausgangskanalabschnitt 6 über die Vertikale V hinaus in eine Parkstellung des Staubsaugers 1 gekippt werden kann, wobei die Anschlussstutzen-Achse y um einen Winkel Alpha von ca. 4° über die Vertikale V verlagerbar ist.

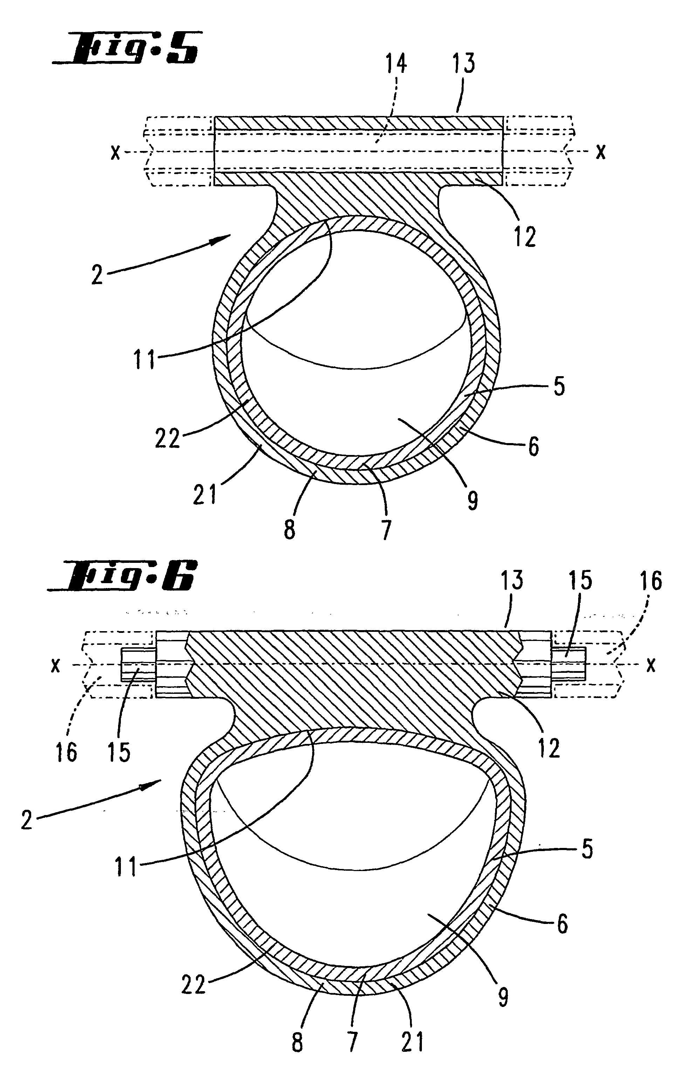

Weiter ist, wie aus Fig. 4 zu erkennen, ein Verkippen des Ausgangskanalabschnittes 6 etwa bis in eine Horizontale erreichbar. Demnach ergibt sich ein möglicher Schwenkwinkel des Ausgangskanalabschnittes 6 von mehr als 90°, wobei durch die erfindungsgemäße Teleskopierbarkeit der Kanalabschnitte 5, 6 in jedem möglichen Kippwinkel ein gleichbleibender Strömungsquerschnitt unter Einhaltung der Symmetrie auf schmalem Bauraum gegeben ist.

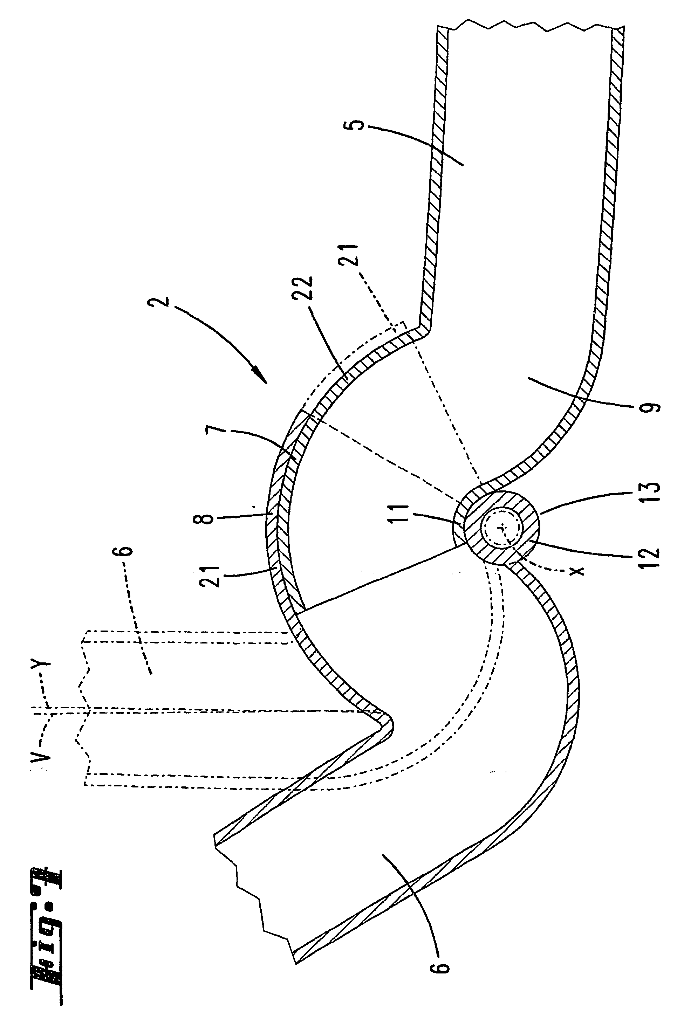

Weiter ist durch die gewählte Lösung der Saugkanalquerschnitt frei wählbar. So kann gemäß der Schnittdarstellung in Fig. 5 ein kreisrunder Saugkanalquerschnitt gewählt sein. Eine alternative Querschnittsausgestaltung zeigt die Fig. 6. Denkbar sind weiter ovale, wappenförmige, ellipsenförmige, quadratische oder auch rechteckige Strömungsquerschnitte.

Wie weiter aus den Fig. 2 und 4 erkennbar, formt der feststehende Eingangskanalabschnitt 5 endseitig, dem Ausgangskanalabschnitt 6 zugeordnet, eine Gelenkschale 11 aus, welche teilweise einen, durch eine die Drehachse x umgebenden Wandung 12 des anderen Kanalabschnittes 6 gebildeten Gelenkzapfen 13 umfasst.

Wie aus der Schnittdarstellung in Fig. 5 zu erkennen, ist die Wandung 12 einstückig mit dem Ausgangskanalabschnitt 6 verbunden, wobei weiter die Wandung 12 in diesem Ausführungsbeispiel als Buchse zum Durchtritt einer in dem Staubsauger-Vorsatzgerät 3 gehalterten Steckachse 14 dient.

Alternativ kann gemäß Fig. 6 die, die Drehachse x umgebende Wandung 12 beidseitig Zapfen 15 ausformen, welche in vorsatzgeräteseitigen Aufnahmen 16 einliegen.

Durch die gewählte Ausgestaltung der erfindungsgemäßen Kippgelenkausbildung 2 ist der Strömungsquerschnitt sowie die Abschottung des Strömungsweges zur Umgebung hin unabhängig vom Kippwinkel.

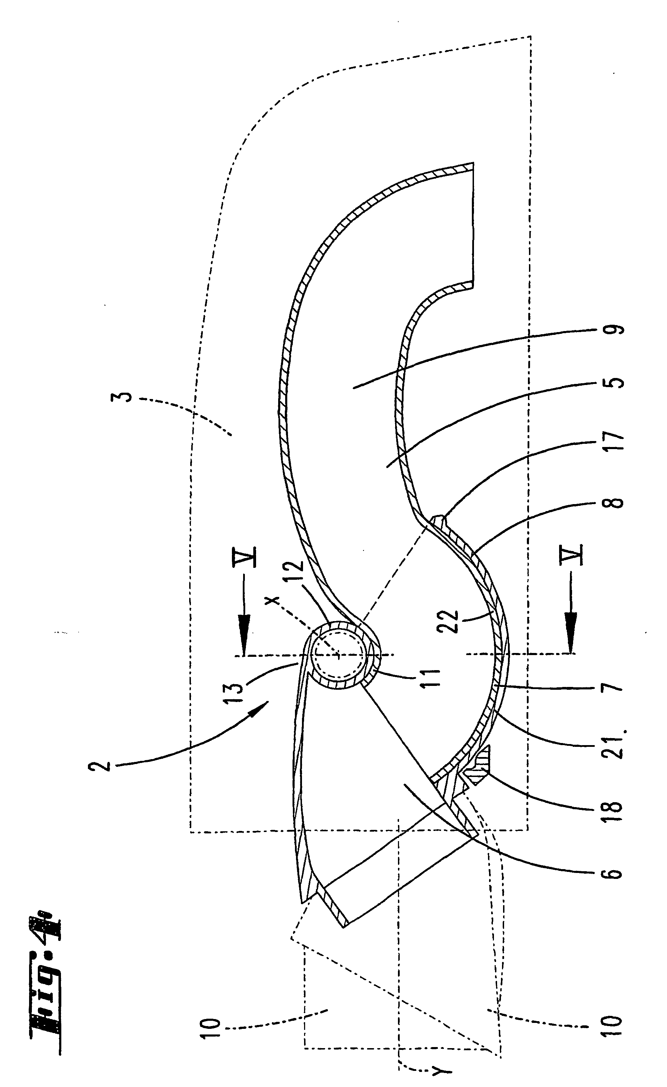

Wie weiter aus den Fig. 2 und 3 zu erkennen, ist die Parkstellung, d. h. die über die Vertikalausrichtung hinausgehende Stellung gemäß Fig. 2 rastsicherbar, wozu endseitig des Ausgangskanalabschnittes 6 außenwandig eine Rastnase 17 angeformt ist, welche in der Parkstellung gemäß Fig. 2 in ein, gegebenenfalls federnd ausweichbar ausgeformtes Gegenstück 18 einfährt.

Des weiteren können gemäß Fig. 3 zwischen den teleskopierbaren Enden 7 und 8 Dichtungen 19, 20 vorgesehen sein, wobei eine Dichtung 19 innenseitig des das Teleskopaußenrohr 21 bildenden Ausgangskanalabschnittes 6 angeordnet ist und mit der Außenseite des das Teleskopinnenrohr 22 bildenden Eingangskanalabschnittes 5 zusammenwirkt. Die weitere Dichtung 20 ist außenseitig des Teleskopinnenrohres 22 (Eingangskanalabschnitt 5) angeordnet und wirkt mit der Innenseite des Teleskopaußenrohres 21 (Ausgangskanalabschnitt 6) zusammen. Die Dichtungen können in Form eines Filzstreifens ausgebildet sein. Denkbar sind jedoch auch Gummi- oder Kunststoff-Dichtlippen. Die Dichtungen 19, 20 besitzen zugleich eine abstreifende Wirkung, wobei die Dichtungen 19, 20 aufgrund der beschriebenen Anordnung einen staubfreien Raum zwischen diesen belassen, der sich je nach Kippstellung vergrößert oder verkleinert.

Zufolge der erfindungsgemäßen Ausgestaltung der Kippgelenkausbildung 2 ist bei einfacher, raumsparender Bauweise unabhängig von der gewählten Kippstellung eine weiche Umlenkung der durch den Saugkanal 9 strömenden Saugluft gegeben.

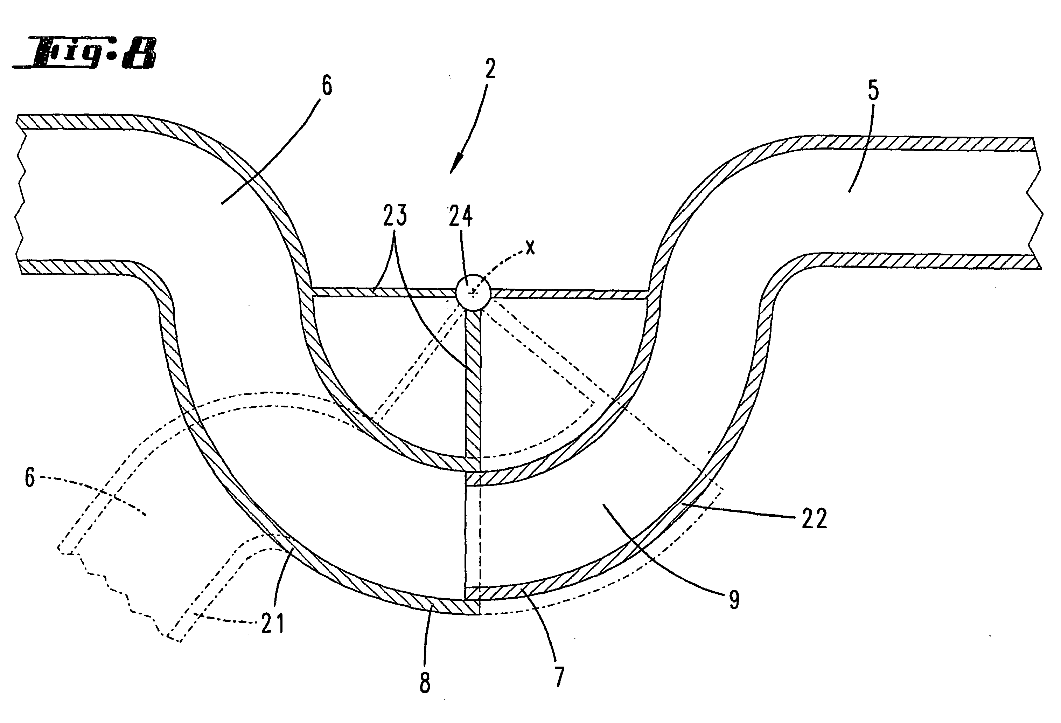

Eine weitere Ausführungsform zeigt Fig. 7, bei welcher entgegen dem zuvor beschriebenen Ausführungsbeispiel die Kippachse x unterhalb des Saugkanals 9 angeordnet ist. Auch hier formt der Eingangskanalabschnitt 5 bzw. das Teleskopinnenrohr 22 eine Gelenkschale 11 aus, zur teilweisen Aufnahme des endseitig des Teleskopaußenrohres 21 angeordneten Gelenkzapfens 13. Auch bei dieser Ausführungsform weisen beide, ineinander verschiebbare Endbereiche des Eingangskanalabschnittes 5 und des Ausgangskanalabschnittes 6 Viertelkreisabschnitte auf.

Je nach Anforderung an das Gelenk bezüglich Stabilität und Platzbedarf, muss die Kippachse x des Gelenkes nicht zwangsläufig in unmittelbarer Nähe zu den Kanalabschnitten gemäß den zuvor beschriebenen Ausführungsbeispielen angeordnet sein. Gemäß der Fig. 8 kann auch ein größerer Abstand zum Saugkanal 9 gewählt sein, wobei bspw. das Teleskopaußenrohr 21 bzw. der Ausgangskanalabschnitt 6 über Stege 23 mit einem in dem Vorsatzgerät gelagerten Gelenkzapfen 24 verbunden ist. Auch bei dieser Ausführungsform ist die Querschnittsausbildung des Saugkanales 9 nahezu beliebig wählbar, wobei weiter die Gelenkachse x sowohl oberhalb als auch unterhalb des Saugkanales 9 angeordnet sein kann.

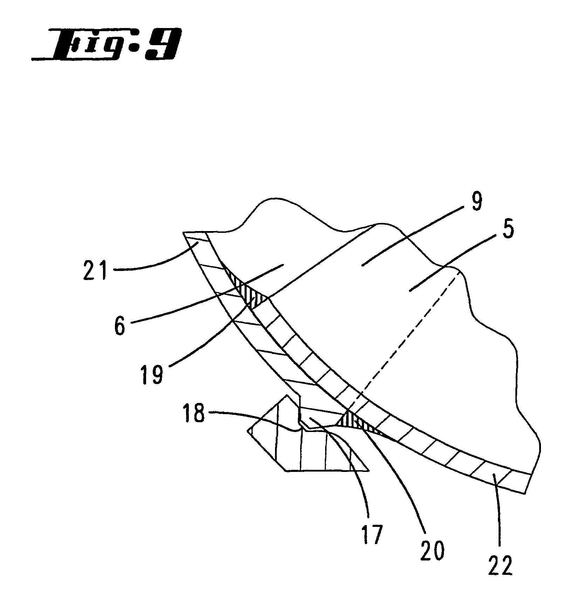

Die Fig. 9 zeigt eine alternative Ausführung der Dichtungsanordnung bzw. -ausbildung. In diesem Ausführungsbeispiel sind die Dichtungen 19 und 20 als Weichlippen ausgebildet und stirnseitig des Teleskopaußenrohres 21 und des Teleskopinnenrohres 22 angeordnet, wobei eine Anformung der Dichtungen 19, 20 an die Teleskoprohre 21, 22 im Zwei-Komponentenspritzverfahren bevorzugt wird. Die freien Endbereiche der Dichtungen 19, 20 wirken auch hier mit der zugeordneten Oberfläche des anderen Teleskoprohres zusammen.

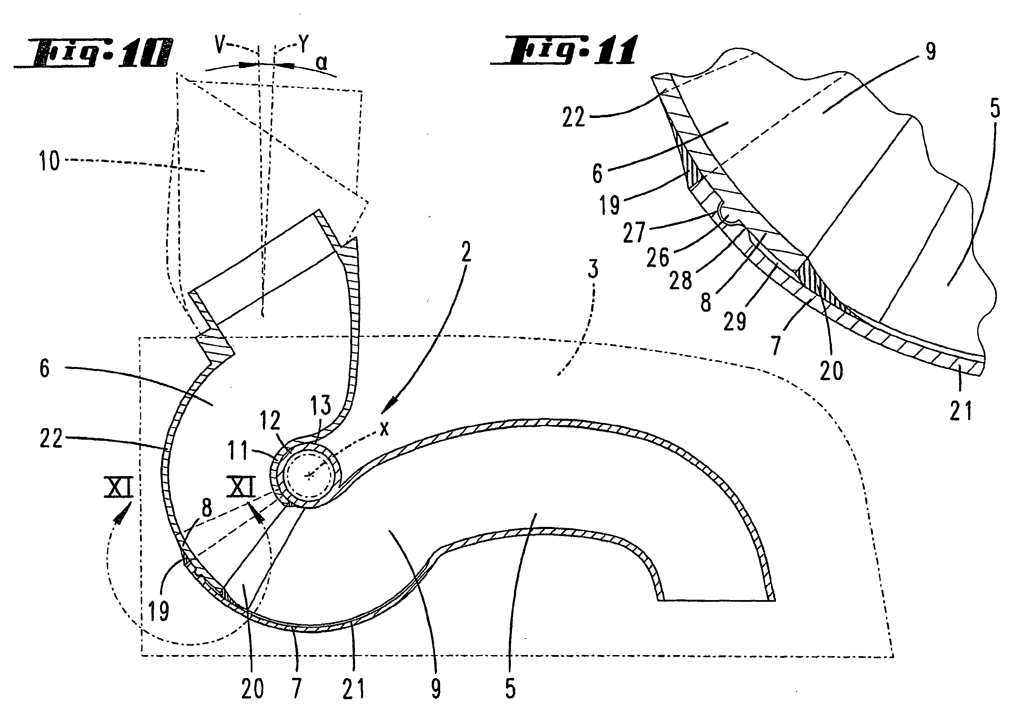

In dem in den Fig. 10 und 11 dargestellten weiteren Ausführungsbeispiel bildet der Eingangskanalabschnitt 5 das Teleskopaußenrohr 21 und entsprechend der Ausgangskanalabschnitt 6 das Teleskopinnenrohr 22 aus. Zufolge dessen taucht das Ende 8 des Ausgangskanalabschnittes 6 in das Ende 7 des Eingangskanalabschnittes 5 ein, wobei hier der feststehende Eingangskanalabschnitt 5 den Gelenkzapfen 13 aufweist, der durch die am Ausgangskanalabschnitt 6 ausgebildete Gelenkschale 11 teilweise umfasst wird.

Die Rastsicherung des Ausgangskanalabschnittes 6 ist in dieser Ausführungsform gebildet durch einen außenwandig im Bereich des in dem Eingangskanalabschnitt 5 aufgenommenen Endes 8 ausgeformten Rastnocken 26, der in eine entsprechend positionierte Rastausnehmung 27 im Bereich der Innenwandung des Eingangskanalabschnittes 5 eingreift. Zur Aufhebung der Rastsicherung überläuft der Rastnocken 26 eine die Rastausnehmung 27 begrenzende Schulter 28, wonach der Rastnocken 26 in einer an den Verschwenkweg des Ausgangskanalabschnittes 6 angepasst ausgerichtete Nut 29 verfahrbar ist.

Die Tiefe sowohl der Rastausnehmung 27 als auch der Nut 29 ist bevorzugt so gewählt, dass unter Berücksichtigung einer sicheren Rast sich die zugeordnete Weichlippendichtung entsprechend der Querschnittskontur im Nutbereich anpassen kann.

## Patentansprüche

1. Kippgelenk (2) eines Staubsauger-Saugkanals (9),vorzugsweise zur Anshlussausbildung an ein Staubsauger-Vorsatzgerät (3), mit einem Eingangskanalabschnitt (5) und einem Ausgangskanalabschnitt (6), wobei angepasst kreisabschnittsförmige Abschnitte zugeordneter Enden (7, 8) des Eingangskanalabschnittes und des Ausgangskanalabschnittes im Zuge einer Verkippung der Abschnitte zueinander teleskopierbar sind, **dadurch gekennzeichnet, dass** auch die der Drehachse zugeordneten Kanalabschnitte teleskopierbar ineinander fahrbar sind und dass eine Außenkontur des Endes (7) des Eingangskanalabschnittes (5) der korrespondierenden Innenkontur des Ausgangskanalabschnitt-Endes (8) angepasst ist, die beide rohrartig gestaltet sind, so dass das Ende (7) des Eingangs Kanalabschnittes und das Ende (8) des Ausgangskanalabschnittes, der mit dem Staubsauger verbindbar ist, eintauchen kann.

2. Kippgelenk nach Anspruch 1, **dadurch gekennzeichnet, dass** der eine Kanalabschnitt (6,5) um cinen festen Drehpunkt im Zuge der Teleskopierung gedrehtwird, während der andere Kanalabschnitt (5, 6) feststehend ist

3. Kippgelenk nach einem oder mehreren der vorhergehenden Ansprüche, **dadurch gekennzeichnet, dass** der eine Kanalabschnitt (6, 5) mit einer, eine Drehachse (x) umgebenden Wandung (12) einen feststehenden Gelenkzapfen (13) ausbildet.

4. Kippgelenk nach einem oder mehreren der vorhergehenden Ansprüche, **dadurch gekennzeichnet, dass** eine Außenwandung des anderen Kanalabschnittes (5, 6) eine den Gelenkzapfen (13) teilweise umfassende Gelenkschale (11) bildet.

5. Kippgelenk nach einem oder mehreren der vorhergehenden Ansprüche, **dadurch gekennzeichnet, dass** innenseitig des Teleskopaußenrohres (21) eine Dichtung (20) angeordnet ist, die mit einer Außenseite des Telekopinnenrohres (22) zusammenwirkt.

6. Kippgelenk nach einem oder mehreren der vorhergehenden Ansprüche, **dadurch gekennzeichnet, dass** außenseitig des Teleskopinnenrohres (22) eine Dichtung (19) angeordnet ist, die mit einer Innenseite des Teleskopaußenrohres (21) zusammenwirkt.

7. Kippgelenk nach einem oder mehreren der vorhergehenden Ansprüche, **dadurch gekennzeichnet, dass** an einer Stirnfläche des Teleskopaußenrohres (21) und/oder des Teleskopinnenrohres (22) eine Dichtung (19, 20) angeordnet ist.

8. Kippgelenk nach einem oder mehreren der vorhergehenden Ansprüche, **dadurch gekennzeichnet, dass** die Dichtung (19, 20) angeformt ist.

9. Kippgelenk nach einem oder mehreren der vorhergehenden Ansprüche, **dadurch gekennzeichnet, dass** die Drehachse (x) der Kanalabschnitte (5, 6) außerhalb des Saugkanals (9) liegt.

10. Kippgelenk nach einem oder mehreren der vorhergehenden Ansprüche, **dadurch gekennzeichnet, dass** die Kanalabschnitte (5, 6) jeweils etwa einem Viertelkreisabschnitt entsprechen.

11. Kippgelenk nach einem oder mehreren der vorhergehenden Ansprüche, **dadurch gekennzeichnet, dass** eine Stellung des einen Kanalabschnittes (6, 5) rastbar ist.

## Claims

1. Tilting hinge joint (2) in a vacuum cleaner suction channel (9), preferably for forming a connection to a vacuum cleaner front-end device (3), having an inlet channel section (5) and an outlet channel section (6), wherein sections adapted to the shape of a segment of a circle in associated ends (7, 8) of the inlet channel section and the outlet channel section are telescopable with one another in the course of tilting the sections, **characterised in that** the channel sections associated with the axis of rotation are also movable into one another telescopably and that an outer contour of the end (7) of the inlet channel section (5) is matched to the corresponding inner contour of the end (8) of the outlet channel section, both being of tubular shape, so that the end (7) of the inlet channel section and the end (8) of the outlet channel section which is connectable to the vacuum cleaner can dip in.

2. Tilting hinge joint according to claim 1, **characterised in that** one channel section (6, 5) is rotated about a fixed point of rotation in the course of telescoping while the other channel section (5, 6) is fixed.

3. Tilting hinge joint according to one or more of the preceding claims, **characterised in that** one channel section (6, 5) forms a fixed pivot pin (13) by means of a wall (12) surrounding an axis of rotation (x).

4. Tilting hinge joint according to one or more of the preceding claims, **characterised in that** an outer wall of the other channel section (5, 6) forms a joint casing (11) partly enclosing the pivot pin (13).

5. Tilting hinge joint according to one or more of the preceding claims, **characterised in that** a seal (20) is arranged on the inside of the telescoping outer tube (21) which seal acts in conjunction with an outer side of the telescoping inner tube (22).

6. Tilting hinge joint according to one or more of the preceding claims, **characterised in that** a seal (19) is arranged on the outside of the telescoping inner tube (22) which seal acts in conjunction with an inner side of the telescoping outer tube (21).

7. Tilting hinge joint according to one or more of the preceding claims, **characterised in that** a seal (19, 20) is arranged on an end face of the telescoping outer tube (21) and/or of the telescoping inner tube (22).

8. Tilting hinge joint according to one or more of the preceding claims, **characterised in that** the seal (19, 20) is moulded in place.

9. Tilting hinge joint according to one or more of the preceding claims, **characterised in that** the axis of rotation (x) of the channel sections (5, 6) is located outside the suction channel (9).

10. Tilting hinge joint according to one or more of the preceding claims, **characterised in that** the channel sections (5, 6) each correspond approximately to a quarter segment of a circle.

11. Tilting hinge joint according to one or more of the preceding claims, **characterised in that** a position of one channel section (6, 5) is latchable.

## Revendications

1. Articulation (2) du tunnel d'aspiration d'un aspirateur (9), de préférence pour le raccordement à un dispositif de rallonge d'un aspirateur (3), avec une partie de tunnel d'entrée (5) et une partie de tunnel de sortie (6), dans lesquelles des parties adaptées, en forme de segment de cercle des extrémités (7, 8) respectives de la partie de tunnel d'entrée et de la partie de tunnel de sortie sont télescopiques, **caractérisée en ce que** les parties de tunnel correspondant à l'axe de rotation sont mobiles de manière télescopique l'une dans l'autre et **en ce qu'**un contour externe de l'extrémité (7) de la partie de tunnel d'entrée (5) est adapté au contour interne correspondant de l'extrémité de la partie de tunnel de sortie (8), les deux sont tubulaires, de telle sorte que l'extrémité (7) de la partie de tunnel d'entrée et l'extrémité (8) de la partie de tunnel de sortie, qui peut être reliée à l'aspirateur, puisse s'enfoncer.

2. Articulation selon la revendication 1, **caractérisée en ce qu'**une des parties de tunnel (6, 5) est tournée autour d'un centre de rotation fixe lors du mouvement télescopique, tandis que l'autre partie de tunnel (5, 6) est fixe.

3. Articulation selon l'une ou plusieurs des revendications précédentes, **caractérisée en ce que** l'une des parties de tunnel (6, 5) est conçue avec une paroi (12) entourant un axe de rotation (x) et un pivot d'articulation (13) fixe.

4. Articulation selon l'une ou plusieurs des revendications précédentes, **caractérisée en ce qu'**une paroi externe de l'autre partie de tunnel (5, 6) constitue une coque d'articulation (11) englobant partiellement le pivot d'articulation (13).

5. Articulation selon l'une ou plusieurs des revendications précédentes, **caractérisée en ce que**, à l'intérieur du tube télescopique externe (21), se trouve un joint d'étanchéité (20) qui interagit avec un côté extérieur du tube télescopique interne (22).

6. Articulation selon l'une ou plusieurs des revendications précédentes, **caractérisée en ce que**, à l'extérieur du tube télescopique interne (22), se trouve un joint d'étanchéité (19) qui interagit avec un côté intérieur du tube télescopique externe (21).

7. Articulation selon l'une ou plusieurs des revendications précédentes, **caractérisée en ce que**, au niveau d'une face frontale du tube télescopique externe (21) et/ou du tube télescopique interne (22), se trouve un joint d'étanchéité (19, 20).

8. Articulation selon l'une ou plusieurs des revendications précédentes, **caractérisée en ce que** le joint d'étanchéité (19, 20) est moulé.

9. Articulation selon l'une ou plusieurs des revendications précédentes, **caractérisée en ce que** l'axe de rotation (x) des parties de tunnel (5, 6) se trouve à l'extérieur du tunnel d'aspiration (9).

10. Articulation selon l'une ou plusieurs des revendications précédentes, **caractérisée en ce que** les parties de tunnel (5, 6) correspondent approximativement à un quart de cercle.

11. Articulation selon l'une ou plusieurs des revendications précédentes, **caractérisée en ce qu'**une position d'une des parties de tunnel (6, 5) est verrouillable.
